# EUROPEAN PATENT APPLICATION

(11) **EP 3 444 755 A1**
(43) Date of publication of application: **20.02.2019**
(21) Application number: 18199246.2
(22) Date of filing: 28.12.2016
(51) Int. Cl.: G06K 19/06, G06K 7/14

(54) **MACHINE READABLE CODE**

(62) Divisional of application: 16207062.7
(71) Applicant: Spotify AB, 111 53 Stockholm (SE)
(72) Inventor: STRIGEUS, Ludvig, 111 53 Stockholm (SE); SVALA, Mattias, 111 53 Stockholm (SE); CASSIDY, Keenan, 111 53 Stockholm (SE); FERRAI, Damian, 111 53 Stockholm (SE)
(74) Representative: Kransell & Wennborg KB

(57) **Abstract**

The present disclosure relates to a method performed by a code generator. The method comprises obtaining a binary code, translating the binary code into an optical code, obtaining a colour average from a region (102) of a digital image (302), selecting a colour for the optical code in an image area (310) of the digital image based on a contrast of said colour to the obtained colour average; and generating the optical code (108) in the selected colour within the image area.

## Description

### TECHNICAL FIELD

The present disclosure relates to methods and devices for generating and reading a machine-readable code.

### BACKGROUND

Optical machine-readable codes have long been used. Common one dimensional barcodes are for example: UPC-A, where the information is encoded in the width and spacing of lines, IM barcodes, where the information is encoded in bars extended up and or down. A common two dimensional bar code is the QR code, where the information is encoded in a regular grid of black and white pixels with visible tracking markers. Two dimensional codes may also use rectangles, dots, hexagons and other geometric patterns in two dimensions to represent the data. Modern two dimensional bar codes, that associate with a specific company, are often called scannables. Tracking markers are necessary in the existing codes to align the capture image to a grid for reading the code. Such tracking markers can disrupt the appearance of the scannable.

### SUMMARY

It is an objective of the present invention to provide an alternative and, in some applications, more practical way of generating/presenting and reading/interpreting an optical machine-readable code. The optical machine-readable code may be designed to convey, in its visual appearance, an association to streaming sound and music, without any disrupting tracking markers. The tracking markers in the present invention (e.g. start, stop and reference markers) may be associated with the code in a manner to further the association to streaming sound and music.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic diagram of an embodiment of a communication network, in accordance with the present invention.
Fig 2 is a schematic block diagram of an embodiment of an image capturing device in accordance with the present invention.
Fig 3 is a schematic block diagram om an embodiment of a code generator in accordance with the present invention.
Fig 4 is a schematic illustration of an embodiment of a computer program product in accordance with the present invention.
Fig 5 is a schematic illustration of an embodiment of a digital image, in accordance with the present invention.
Fig 6 illustrates different examples of representations of the optical machine-readable code, in accordance with the present invention.
Fig 7a-d illustrate examples of image processing for identifying quadrilateral comprising the optical code, in accordance with the present invention.
Fig 8 illustrates an embodiment of an optical machine-readable code, in accordance with the present invention.
Fig 9 illustrates an embodiment of processing of a binary code obtained from an optical machine-readable code, in accordance with the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

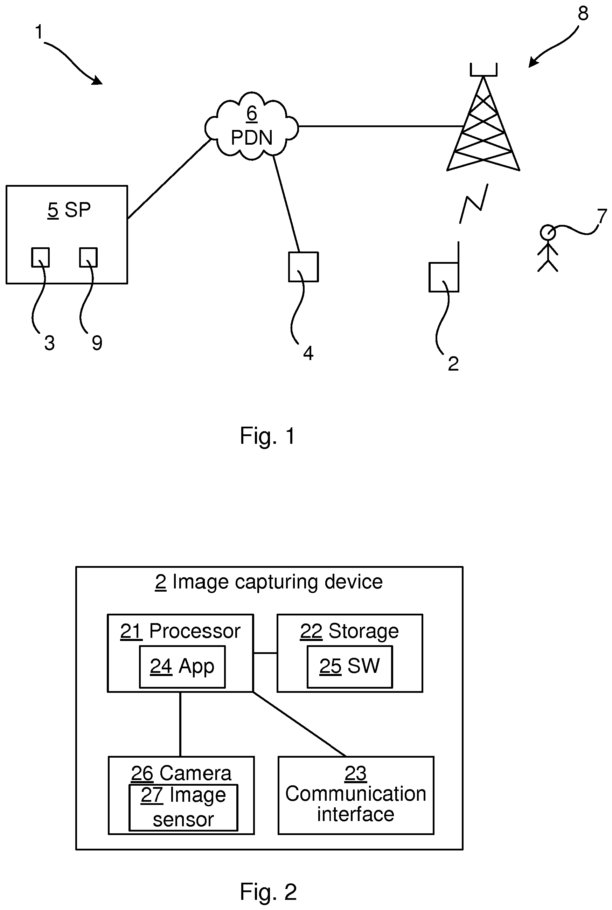

Figure 1 illustrates an embodiment of a communication network 1 within which embodiments of the present invention may be used.

The system 1 comprises an image capturing device 2, e.g. a wired or wireless device, such as a radio device, comprising an image sensor for capturing an image. A radio device 2 may be any device or user equipment (UE), mobile or stationary, enabled to communicate over a radio channel in a communication network 1, for instance but not limited to e.g. mobile phone, smartphone, media players, cameras, or any type of consumer electronic, tablet computer, laptop, or personal computer (PC). Preferably, the image capturing device 2 is a smartphone comprising a camera with a digital image sensor. A human user 7 of the image capturing device 2 is schematically shown.

If the image capturing device 2 is a radio device, it may be connected to a Packet Data Network (PDN), e.g. the Internet, via any Radio Access Network (RAN) 8, e.g. a Local Area Network (LAN) or a cellular network in accordance with a Third Generation Partnership Project (3GPP) communication standard, comprising one or more base stations.

The image capturing device 2 may be in the vicinity of an optical display 4 for being able to, by means of the image sensor, capturing an optical digital image presented on the optical display 4.

The optical display 4 is comprised in, or communicatively connected to, the code generator 3, e.g. via the PDN 6. The code generator 3 is configured to generate the optical machine-readable code which is displayed in the digital image on the optical display 4. The code generator 3 may e.g. be hosted by a service provider (SP) 5 comprising a server arrangement 9.

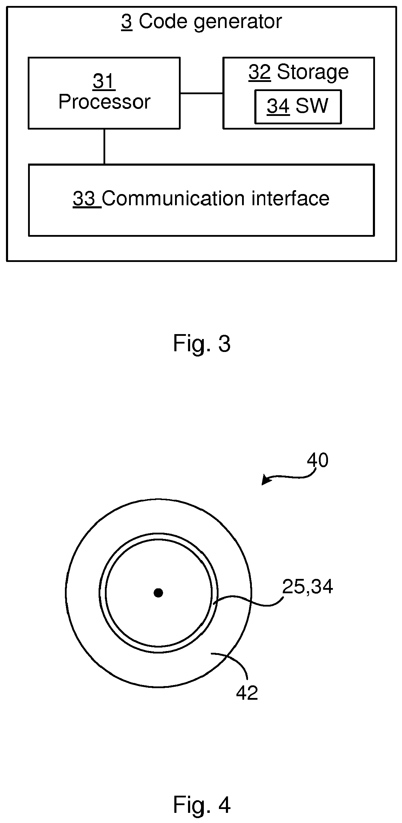

Figure 2 illustrates an embodiment of the image capturing device 2, e.g. a smartphone. The image capturing device 2 comprises processing circuitry 21 e.g. a central processing unit (CPU). The processing circuitry 21 may comprise one or a plurality of processing units in the form of microprocessor(s). However, other suitable devices with computing capabilities could be comprised in the processing circuitry 21, e.g. an application specific integrated circuit (ASIC), a field programmable gate array (FPGA) or a complex programmable logic device (CPLD). The processing circuitry 21 is configured to run one or several computer program(s) or software (SW) 25 (see also figure 4) stored in a storage 22 of one or several storage unit(s) e.g. a memory. The SW 25 may e.g. comprise application SW for a software application (app) 24 for making the image capturing device 2 perform an embodiment of a method of the present disclosure, which app 24 may be formed by the processing circuitry 21 running the application SW. The storage unit is regarded as a computer readable means 42 (see figure 4) as discussed herein and may e.g. be in the form of a Random Access Memory (RAM), a Flash memory or other solid state memory, or a hard disk, or be a combination thereof. The processing circuitry 21 may also be configured to store data in the storage 22, as needed.

The image capturing device 2 also comprises an image sensor 27, typically comprised in a camera 26 integrated in the image capturing device 2. The image sensor 27 may e.g. be a semiconductor charge-coupled devices (CCD), or active pixel sensors in complementary metal-oxide-semiconductor (CMOS), or N-type metal-oxide-semiconductor (NMOS, Live MOS) image sensor. Further, the image capturing device 2 may comprise a communication interface 23, e.g. comprising a radio interface, for communication within the communication network 1, e.g. with the SP 5 such as with the server arrangement 9 thereof.

Figure 3 illustrates an embodiment of a code generator 3. The code generator 3 comprises processing circuitry 31 e.g. a central processing unit (CPU). The processing circuitry 31 may comprise one or a plurality of processing units in the form of microprocessor(s). However, other suitable devices with computing capabilities could be comprised in the processing circuitry 31, e.g. an application specific integrated circuit (ASIC), a field programmable gate array (FPGA) or a complex programmable logic device (CPLD). The processing circuitry 31 is configured to run one or several computer program(s) or software (SW) 34 (see also figure 4) stored in a storage 32 of one or several storage unit(s) e.g. a memory. The storage unit is regarded as a computer readable means 42 (see figure 4) as discussed herein and may e.g. be in the form of a Random Access Memory (RAM), a Flash memory or other solid state memory, or a hard disk, or be a combination thereof. The processing circuitry 31 may also be configured to store data in the storage 32, as needed. The code generator 3 also comprises communication interface 33 for communication within the communication network 1, e.g. with the SP 5 such as with the server arrangement 9 thereof or with the optical display 4 which may or may not be part of the code generator 3.

Figure 4 illustrates an embodiment of a computer program product 40. The computer program product 40 comprises a computer readable (e.g. nonvolatile and/or non-transitory) medium 42 comprising software/computer program 25 and/or 34 in the form of computer-executable components. The computer program 25/34 may be configured to cause a image capturing device 2 or code generator 3, e.g. as discussed herein, to perform an embodiment of a method of the present disclosure. The computer program may be run on the processing circuitry 21/31 of the image capturing device 2 or code generator 3 for causing it to perform the method. The computer program product 40 may e.g. be comprised in a storage unit or memory 22/32 comprised in the image capturing device 2 or code generator 3 and associated with the processing circuitry 21/31. Alternatively, the computer program product 40 may be, or be part of, a separate, e.g. mobile, storage means/medium, such as a computer readable disc, e.g. CD or DVD or hard disc/drive, or a solid state storage medium, e.g. a RAM or Flash memory. Embodiments of the present disclosure may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

According to the invention, a scannable code (herein called an optical machine-readable code) may be generated with the information encoded in a representation that associates to a soundwave. The association may be strengthened by an animation lead in, that visualizes a soundwave moving.

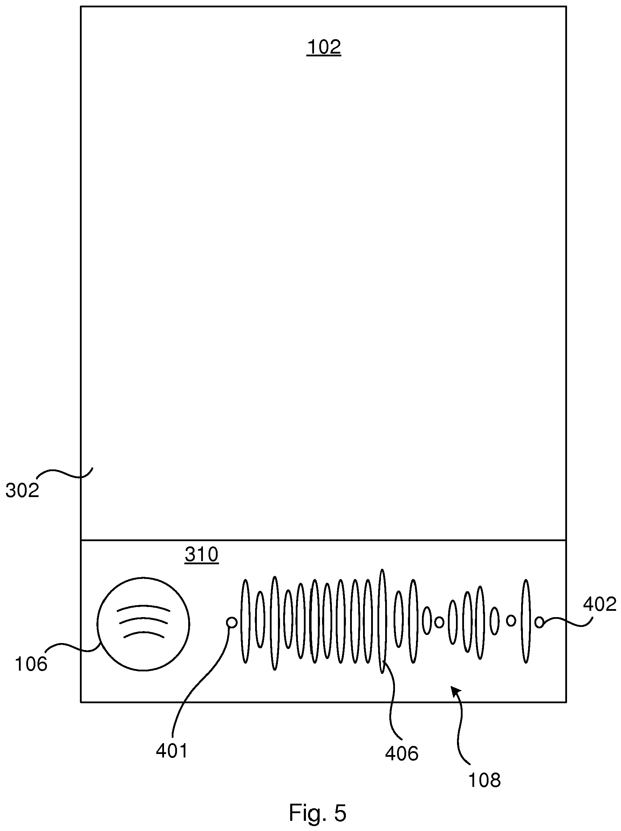

As shown in figure 5, the digital image 302 consists of the area 102 and the image area 310. Area 102 may contain an image with overlaid text and/or other graphics and logotypes. Image area 310 may contain a media company logotype 106 and the optical machine-readable code 108 comprising a start marker 401, a stop marker 402 and a reference mark 406.

The optical machine-readable code 108 visually associates to a soundwave. There are several possible ways to make this association. Some examples are shown in figure 2. Where optical machine-readable code examples 202 to 210 are different possible representations.

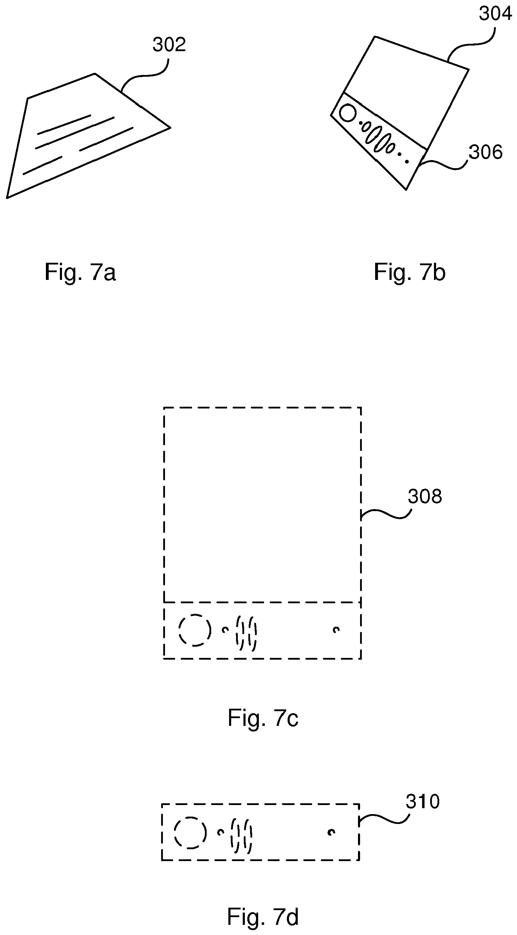

A optical machine-readable code 108 may be decoded in the following way:
1) The digital image 302 (figure 7a) is captured by the camera 26 (or selected from a library of photos) and converted into Gray-scale.
2) Edge detection is performed within the image 302 using for example the OpenCV library. Edges that cross in a pattern that indicate a quadrilateral (a.k.a. a rectangle viewed in perspective) are selected for closer examination.

In figure 7b, the three quadrilaterals (304, 306 and the outer boundary of 304+306 combined) are picked up as candidates for parsing.
3) Each quadrilateral is checked for having two sides much longer than the other two. If so, the target rectangle 310 (figure 7d) is used and only two rotations are tested, both with the much longer side aligned with the long side of 310.

If the sides are of similar length, the quadrilateral is transformed into 308 (figure 7c) and four rotations must be tested.

The straight rectangle 308/310 is filled with pixels that fetch their colour information from the quadrilateral candidate in the image. I.e. the perspective quadrilateral is transformed into a flat 2D rectangle.

If the 308 rectangle is filled, the pixels are then copied from the lower part of 308 into 310. The process then continues with the analysis of the candidate located in 310.

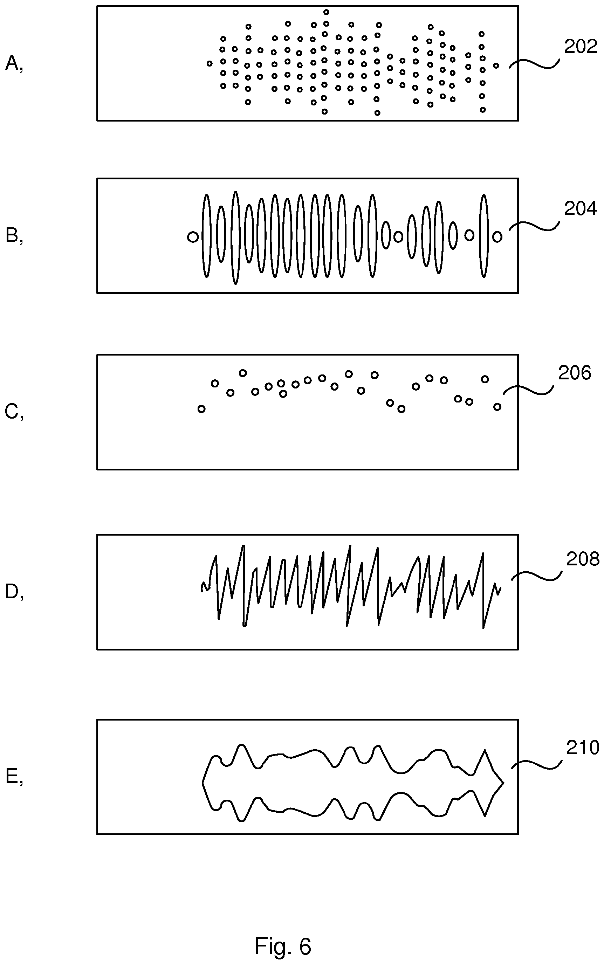

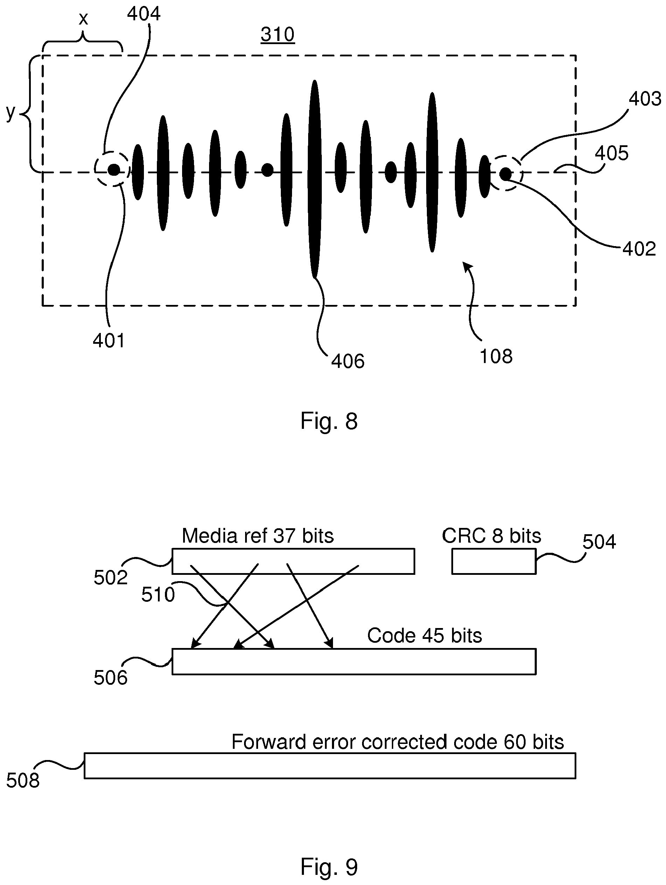

4) In figure 8, the optical machine-readable code 108 is designed to have a minimum offset at the start marker 401 and at the stop marker 402. Here the offset is represented as the length of a bar as used in code example 204 (figure 6B). But an offset may alternatively be a distance from an invisible centre line (herein called axis) 405 to a dot of code example 206 (figure 6C) or line-contour of code example 208 (figure 6D), or the distance between two line-contours of code example 210 (figure 6E), or the number of dots within a rectangular region of code example 202 (figure 6A), or any other optical marks offset from the axis 405.

The exact location of the start marker 401 within the start area 404 is first established, likewise for the stop marker 402 within the stop area 403. This may be done by testing for all possible locations within areas 403 and 404 and testing if there is a disc of light or darkness at that point.

With the exact location of start marker 401 and stop marker 402 established, the virtual axis 405 can be drawn. In the middle of this axis may be a reference mark 406, here at the end of a bar to fit in with the visualisation of the optical code 108, representing the maximum offset from the axis 405.

In accordance with the inventive method of reading the optical machine-readable code 108 the pixels along axis 405 may now be scanned to find the axis points representing the exact horizontal position of each vertical bar, whose end represents an optical mark, by examining the alternating patterns of light and dark.

The method now takes the offset, i.e. the orthogonal distance from the axis 405 (here the length of each bar) of start marker 401 and stop marker 402, and the reference mark 406, the difference divided by 7 being the step size for the possible length values encoded in the bars (optical marks) in the optical code 108.

Each bar is then measured in length (from its respective axis point to the optical mark of the end of the bar) and rounded to the nearest step size. An error value (certainty) is encoded based on the difference between the measured distance and the calculated exact step size. Thus if the length is spot on the step size the error value is 0, if it is exactly in between two step sizes the error is 100%.

Each distance apart from the fixed lengths of the start and stop markers 401 and 402, and the reference mark 406, encodes 3 bits. The distances are encoded using a Gray code table, i.e. only a single bit changes between each length step.

| Line length | Bits (abc) |
|---|---|
| 0 | 000 |
| 1 | 001 |
| 2 | 011 |
| 3 | 010 |
| 4 | 110 |
| 5 | 111 |
| 6 | 101 |
| 7 | 100 |

Thus if an optical mark (end of bar) is measured to lie between distance of steps 3 and 4, only a single bit a is uncertain (possible bits are 010 and 110). If a Gray code had not been used, all three bits had been uncertain (e.g. possible bits are 011 and 100).

Each measured distance thus generates 3 bits with potentially one bit with less than 100% certainty.

In figure 9 is shown the 60 bits forward error corrected binary code word 508, which was encoded into 20 offsets/distances (bars) and were shuffled 510 before encoding. This shuffling may be used to spread out the errors, if a whole bar/distance went missing. The forward error correction used can for example be a convolutional code.

Instead of having the 3 bits be consecutive, the lost bits are non-consecutive in the code word. This improves the chances for the forward error correction to work when a whole bar/distance is lost.

Thus to scan the optical code, after the lengths of the found bars are converted into bits with certainties, the bits are shuffled back to the right order.

The now ordered bits may be fed with the certainties (bit probabilities) into for example a Viterbi decoder that performs a maximum likelihood decoding of the forward error corrected code and extracts the error corrected 45 bits 506.

The 45 bit code may be decomposed into a media reference 502 of 37 bits and a checksum of 8 bits.

The checksum may be verified and if it is not correct, the quadrilateral candidate is discarded.

Eventually a candidate quadrilateral is properly decoded.

The media reference is then sent to the server system 9 to acquire the media reference.

When the media reference was created, a random number may have been allocated on the server 9 and stored in a table linking the random number to the desired media. For example a playlist, an album, a song, a video, a user profile or an artist profile.

Instead of a random number, an encrypted consecutively increasing index counter can be used. Thus when the server receives the scanned media reference, it is decrypted to yield the index of the media reference.

A table is still needed, since 37 bits is not enough to store an arbitrary reference, for example a URI, to every possible song, playlist, video, user, album and artist. The code can of course be extended to have more optical marks to be able to encode any media reference directly.

The server 9 then returns the proper media to the image capturing/user device 2 that performed the scan.

If the server does not find a media reference matching the decoded ID, the server responds with this fact and the decoder knows that the candidate was actually an incorrect candidate and will continue scanning without informing the user 7 of the device 2 that a tag was found.

The optical code 108 may be inverted. The scanner determines that the code is inverted by comparing the colour of the code marks to the code's background colour, and if the lines are darker than the tag background the code is considered to be inverted.

The code may be printed on paper or displayed on a display 4. When displayed on a screen, the optical code may be animated to further strengthen the association with sound waves and music.

This animation may be done by generating distances to marks (e.g. bar lengths) by summing a random amount of sine and cosine curves and using 23 samples from the summed curve as the distances/offsets for the optical code. The animated curves do not follow the rule of a minimum offset bar in the beginning and end with a maximum bar in the middle. This speeds up discarding of the animated bar.

Another animation may be a linear fade in of the optical code from left to right. The code is then initially invisible, then starting from the left to right, the bars both stretch out from the invisible axis 405 into the their proper length and at the same time fade from white to their proper colour.

After generating enough curves for a second of animation the frames are stored in an animated gif, mng, png, or image file, or video file. After the optical code has been displayed for e.g. 10 seconds, the animation can run again.

When the optical code is generated, a colour average may be picked from region 102 in figure 5, by picking colours that stand out in the image where the colour is determined to be of sufficient contrast to the background by measuring the brightness value by converting the colour to its grayscale representation (one way of doing that is to convert RGB to YUV and look at the Y value). The chance that image area 310 will be detected as a separate rectangle may thus be increased.

Below follow some more specific aspects and embodiments of the present invention.

According to an aspect of the present invention, there is provided a method of reading an optical machine-readable code performed by an image capturing device 2. The method comprises capturing a digital image 302 (typically 2-dimensional) by means of an image sensor 27 (e.g. a CCD or CMOS image sensor) of the image capturing device. The method also comprises identifying an image area 310 in the captured digital image, the image area comprising the machine-readable code. The method also comprises, within the image area, finding a predefined optical start marker 401 defining a start point and finding a predefined optical stop marker 402 defining a stop point, an axis 405 (typically in the form of an imaginary straight line) being defined between the start point and the stop point. The method also comprises defining a plurality of axis points along the axis, typically between the start and stop markers 401 and 402. The method also comprises, for each axis point, determining a first distance within the image area to an optical mark, measured from said axis point in a first direction which is orthogonal to the axis. The method also comprises translating the first distances to a binary code by means of Gray code, each first distance encoding at least three bits of said binary code.

In some embodiments, the method of reading an optical machine-readable code further comprises finding an optical reference mark 406 at an orthogonal distance from the axis 405, said orthogonal distance defining a reference distance which the first distances are defined in relation to. In some embodiments, the reference distance is a maximum distance. The reference distance may be positioned, as measured in a direction parallel with the axis 405, in the middle between the start marker (401) and the stop marker (402). In some embodiments, each of the first distances, as part of the translating, is defined to have any one of a number of predefined relative distances relative to the reference distance. In some embodiments, the difference between the determined first distance and the nearest predefined relative distances, for each of the axis points, is used as a measurement of certainty. In some embodiments, the measurement of certainty is used in a Viterbi decoder.

In some embodiments, the start marker 401 and the stop marker 402 may each define a minimum distance to the axis 405. Thus, the first distances and/or any second distances may be measured in relation to said minimum distance to the axis, e.g. in addition to being measured in relation to the reference distance.

In some embodiments, the method of reading an optical machine-readable code further comprises, for each axis point, determining a second distance within the image area to an optical mark, measured from said axis point in a second direction which is opposite to the first direction (and thus also orthogonal to the axis 405), and translating the second distances to a binary code by means of Gray code, each second distance encoding at least three bits of said binary code. In some embodiments, it is also determined that the binary code of the second distances is identical to the binary code of the first distances. By the optical code 108 being symmetrical on both sides of the axis 405, the code may be decoded twice, once on each side of the axis, further ensuring that the decoding is correct. Alternatively, the optical code 108 may intentionally not be symmetrical with the axis 405 as symmetry axis, allowing a second binary code to be encoded to be encoded by the second distances.

In some embodiments, the distance between any consecutive two of the axis points is the same along the axis.

According to another aspect of the present invention, there is provided a computer program product comprising computer-executable components for causing an image capturing device to perform an embodiment of a method of the present disclosure when the computer-executable components are run on processing circuitry comprised in the image capturing device.

According to another aspect of the present invention, there is provided an image capturing device for reading an optical machine-readable code. The image capturing device comprises processing circuitry, and storage storing instructions executable by said processing circuitry whereby said image capturing device is operative to capture a digital image by means of an image sensor of the image capturing device. The image capturing device is also operative to identify an image area in the captured digital image, the image area comprising the machine-readable code. The image capturing device is also operative to, within the image area, find a predefined optical start marker defining a start point and find a predefined optical stop marker defining a stop point, an axis being defined between the start point and the stop point. The image capturing device is also operative to define a plurality of axis points along the axis. The image capturing device is also operative to, for each axis point, determine a first distance within the image area to an optical mark, measured from said axis point in a first direction which is orthogonal to the axis. The image capturing device is also operative to translate the first distances to a binary code by means of Gray code, each first distance encoding at least three bits of said binary code. The image capturing device may thus be arranged to perform embodiments of the method of reading an optical machine-readable code in accordance with the present disclosure. The image capturing device may e.g. be a smartphone comprising a digital camera.

According to another aspect of the present invention, there is provided a method performed by a code generator 3. The method comprises obtaining a binary code. The method also comprises translating the binary code, by means of Gray code, into first distances within an image area, each of said first distances being measured from an axis point on an axis in the image area, in a first direction which is orthogonal to the axis. The method also comprises forming an optical mark at the end of each of the first distances in the image area. The method also comprises, at each end of the axis, forming an optical start marker and stop marker, respectively, defining a start point and a stop point, respectively, of the axis within the image area. The method also comprises comprising the image area in a digital image. The method also comprises presenting the digital image on an optical display 4 whereby the optical marks form an optical machine-readable code in the image area in the digital image.

According to another aspect of the present invention, there is provided a computer program product comprising computer-executable components for causing a code generator to perform an embodiment of a method of the present disclosure when the computer-executable components are run on processing circuitry comprised in the code generator.

According to another aspect of the present invention, there is provided a code generator comprising processing circuitry, and storage storing instructions executable by said processing circuitry whereby said code generator is operative to obtain a binary code. The code generator is also operative to translate the binary code, by means of Gray code, into first distances within an image area, each of said first distances being measured from an axis point on an axis in the image area, in a first direction which is orthogonal to the axis. The code generator is also operative to form an optical mark at the end of each of the first distances in the image area. The code generator is also operative to, at each end of the axis, form an optical start marker and stop marker, respectively, defining a start point and a stop point, respectively, of the axis within the image area. The code generator is also operative to comprise the image area in a digital image. The code generator is also operative to present the digital image on an optical display whereby the optical marks form an optical machine-readable code in the image area in the digital image. The code generator may thus be arranged to perform embodiments of the method for generating a code in accordance with the present disclosure.

By generating the optical machine-readable code such that distances from an axis encode the data held by the optical machine-readable code (here a binary code), a more practical alternative to conventional barcodes may be obtained, depending on the application. The optical machine-readable code may e.g. work better, e.g. better fit or blend, with the digital image as a whole.

Below follows an itemized list of some embodiments of the present invention.
Item 1. A method of reading an optical machine-readable code 108 performed by an image capturing device 2, the method comprising:
   capturing a digital image 302 by means of an image sensor 27 of the image capturing device 2;
   identifying an image area 310 in the captured digital image 302, the image area comprising the machine-readable code;
   within the image area 310, finding a predefined optical start marker 401 defining a start point and finding a predefined optical stop marker 402 defining a stop point, an axis 405 being defined between the start point and the stop point;
   defining a plurality of axis points along the axis 405;
   for each axis point, determining a first distance within the image area to an optical mark, measured from said axis point in a first direction which is orthogonal to the axis; and
   translating the first distances to a binary code by means of Gray code, each first distance encoding at least three bits of said binary code.
Item 2. The method of Item 1, further comprising:
   finding an optical reference mark 406 at an orthogonal distance from the axis (405), said orthogonal distance defining a reference distance which the first distances are defined in relation to.
Item 3. The method of Item 2, wherein the reference distance is a maximum distance.
Item 4. The method of Item 2 or 3, wherein the reference mark 406 is, in a direction parallel with the axis 405, positioned in the middle between the start marker 401 and the stop marker 402.
Item 5. The method of any Item 2-4, wherein each of the first distances, as part of the translating, is defined to have any one of a number of predefined relative distances relative to the reference distance.
Item 6. The method of Item 5, wherein, for each of the axis points, the difference between the determined first distance and the nearest predefined relative distances is used as a measurement of certainty.
Item 7. The method of Item 6, further comprising using the measurement of certainty in a Viterbi decoder.
Item 8. The method of any preceding Item, wherein the start marker 401 and the stop marker 402 each define a minimum distance to the axis 405.
Item 9. The method of any preceding Item, further comprising:
   for each axis point, determining a second distance within the image area to an optical mark, measured from said axis point in a second direction which is opposite to the first direction; and
   translating the second distances to a binary code by means of Gray code, each second distance encoding at least three bits of said binary code.
Item 10. The method of Item 9, further comprising:
   determining that the binary code of the second distances is identical to the binary code of the first distances.
Item 11. The method of any preceding claim, wherein the distance between any consecutive two of the axis points is the same along the axis.
Item 12. A computer program product comprising computer-executable components 25 for causing an image capturing device to perform the method of any one of Items 1-11 when the computer-executable components are run on processing circuitry 21 comprised in the image capturing device.
Item 13. An image capturing device 2 for reading an optical machine-readable code, the image capturing device comprising:
   processing circuitry 21; and
   storage 22 storing instructions 25 executable by said processing circuitry whereby said image capturing device is operative to:
      capture a digital image 302 by means of an image sensor 27 of the image capturing device;
      identify an image area 310 in the captured digital image 302, the image area comprising the machine-readable code;
      within the image area 310, find a predefined optical start marker 401 defining a start point and find a predefined optical stop marker 402 defining a stop point, an axis 405 being defined between the start point and the stop point;
      define a plurality of axis points along the axis 405;
      for each axis point, determine a first distance within the image area to an optical mark, measured from said axis point in a first direction which is orthogonal to the axis; and
      translate the first distances to a binary code by means of Gray code, each first distance encoding at least three bits of said binary code.
Item 14. The image capturing device of Item 13, wherein the image capturing device is a smartphone comprising a digital camera.
Item 15. A method performed by a code generator 3, the method comprising:
   obtaining a binary code;
   translating the binary code, by means of Gray code, into first distances within an image area 310, each of said first distances being measured from an axis point on an axis 405 in the image area, in a first direction which is orthogonal to the axis;
   forming an optical mark at the end of each of the first distances in the image area;
   at each end of the axis 405, forming an optical start marker 401 and stop marker 402, respectively, defining a start point and a stop point, respectively, of the axis within the image area;
   comprising the image area 310 in a digital image 302; and
   presenting the digital image on an optical display 4 whereby the optical marks form an optical machine-readable code in the image area in the digital image.
Item 16. A computer program product comprising computer-executable components 34 for causing a code generator 3 to perform the method of Item 13 when the computer-executable components are run on processing circuitry 31 comprised in the code generator.
Item 17. A code generator 3 comprising:
   processing circuitry 31; and
   storage 32 storing instructions 34 executable by said processing circuitry whereby said code generator is operative to:
      obtain a binary code;
      translate the binary code, by means of Gray code, into first distances within an image area 310, each of said first distances being measured from an axis point on an axis 405 in the image area, in a first direction which is orthogonal to the axis;
      form an optical mark at the end of each of the first distances in the image area 310;
      at each end of the axis 405, form an optical start marker 401 and stop marker 402, respectively, defining a start point and a stop point, respectively, of the axis within the image area 310;
      comprise the image area 310 in a digital image 302; and
      present the digital image 302 on an optical display 4 whereby the optical marks form an optical machine-readable code in the image area 310 in the digital image.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method performed by a code generator (3), the method comprising:
obtaining a binary code;
translating the binary code into an optical code;
obtaining a colour average from a region (102) of a digital image (302);
selecting a colour for the optical code in an image area (310) of the digital image (302) based on a contrast of said colour to the obtained colour average; and
generating the optical code (108) in the selected colour within the image area (310).

2. The method of claim 1, wherein the selecting of the colour comprises measuring a brightness value of the colour by converting the colour to its grayscale representation.

3. The method of claim 2, wherein the converting is from RGB to YUV wherein the Y value is the brightness value.

4. The method of any preceding claim, wherein the translating is by means of Gray code.

5. The method of any preceding claim, wherein the translating comprises translating the binary code into first distances within the image area (310), each of said first distances being measured from an axis point on an axis (405) in the image area, in a first direction which is orthogonal to the axis; and wherein the generating of the optical code comprises forming an optical mark at the end of each of the first distances in the image area.

6. The method of claim 5, wherein the generating of the optical code comprises forming an optical start marker (401) within a start area (404) and an optical stop marker (402) within a stop area (403) in the image area (310), and said start and stop markers are in the form of a disc of light or darkness within the start and stop areas respectively.

7. The method of claim 6, wherein the start marker (401) and stop marker (402), respectively, are formed at each end of the axis (405), defining a start point and a stop point, respectively, of the axis within the image area.

8. The method of any preceding claim, further comprising presenting the digital image on an optical display (4) where the optical code forms an optical machine-readable code in the image area in the digital image.

9. A computer program product comprising computer-executable components (34) for causing a code generator (3) to perform the method of any preceding claim when the computer-executable components are run on processing circuitry (31) comprised in the code generator.

10. A digital image (302) comprising:
a region (102), and
an image area (310) comprising a machine readable optical code (108),
wherein the optical code is of a colour selected to contrast with an average colour of the region (102);
the optical code comprising an optical start marker (401) and an optical stop marker (402), and optical marks at orthogonal distances from an axis (405) defined between the start and stop markers.

11. The digital image of claim 10, wherein the optical start and stop markers are formed as respective discs of light or darkness.

12. A code generator (3) comprising:
processing circuitry (31); and
storage (32) storing instructions (34) executable by said processing circuitry whereby said code generator is operative to:
obtain a binary code;
translate the binary code into an optical code;
obtain a colour average from a region (102) of a digital image (302);
select a colour for the optical code in an image area (310) of the digital image (302) based on a contrast of said colour to the obtained colour average; and
generate the optical code (108) in the selected colour within the image area (310).
